Europäisches Patentamt

European Patent Office

Office européen des brevets

(11) Veröffentlichungsnummer: **0 425 527 B1**

(19)

(12) **EUROPÄISCHE PATENTSCHRIFT**

(45) Veröffentlichungstag der Patentschrift: **23.08.95**

(21) Anmeldenummer: **89907614.5**

(22) Anmeldetag: **27.06.89**

(86) Internationale Anmeldenummer:
**PCT/AT89/00064**

(87) Internationale Veröffentlichungsnummer:
**WO 90/00182 (11.01.90 90/02)**

Die Akte enthält technische Angaben, die nach
dem Eingang der Anmeldung eingereicht wurden
und die nicht in dieser Patentschrift enthalten sind.

(51) Int. Cl.⁶: **C08L 95/00**, C08J 3/00,
C10C 3/02, //(C08L95/00,23:02,
53:02)

(54) **VERFAHREN ZUR HERSTELLUNG EINES MIT THERMOPLASTISCHEM KUNSTSTOFF MODIFIZIERTEN BITUMINÖSEN BINDEMITTELS FÜR BAUSTOFFE.**

(30) Priorität: **28.06.88 AT 1681/88**

(43) Veröffentlichungstag der Anmeldung:
**08.05.91 Patentblatt  91/19**

(45) Bekanntmachung des Hinweises auf die
Patenterteilung:
**23.08.95 Patentblatt  95/34**

(84) Benannte Vertragsstaaten:
**BE CH DE FR GB LI LU NL SE**

(56) Entgegenhaltungen:
**AT-A- 370 126**

(73) Patentinhaber: **NOVOPHALT S.A.**
**11, boulevard du prince Henri, P.O. Box 410**
**L-Luxembourg (LU)**

Patentinhaber: **STROMMER, Erich**
**Mattersburgerstrasse 56**
**A-7022 Schattendorf (AT)**

(72) Erfinder: **STROMMER, Erich**
**Mattersburgerstrasse 56**
**A-7022 Schattendorf (AT)**

(74) Vertreter: **Pawloy, Heinrich, Dr. et al**
**Patentanwälte**
**Sonn, Pawloy, Weinzinger & Wolfram**
**Riemergasse 14**
**A-1010 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 425 527 B1

**Beschreibung**

Die Erfindung bezieht sich auf ein Verfahren zur Herstellung eines mit thermoplastischem Kunststoff modifizierten bituminösen Bindemittels für Baustoffe, insbesondere Straßenbaumaterial, wobei zur Bildung des Bindemittels schmelzflüssiges Bitumen zusammen mit einem Thermoplast oder einer Thermoplastmischung, vorzugsweise einem Olefinpolymer, einer Homogenisierungsbehandlung unter Einwirkung mechanischer Scherkräfte unterworfen wird, wobei im Thermoplastmaterial ein Molekülabbau stattfindet.

Es ist eine Reihe von Verfahren vorgenannter Art bekannt, mit denen bituminöse Bindemittel hergestellt werden können, deren Eigenschaften durch den Thermoplastzusatz gegenüber gewöhnlichem Bitumen verbessert sind. Ein derartiges Modifizieren von Bitumen verlangt oft einen verhältnismäßig großen Arbeitseinsatz, weil eine Reihe verschiedener Thermoplaste, deren Zugabe zum Bitumen dessen Eigenschaften beträchtlich zu verbessern vermag, in Bitumen sehr schlecht löslich sind; andere zur Modifikation von Bitumen in Betracht kommende Thermoplaste, welche bessere Lösungseigenschaften in Bitumen aufweisen, haben oft einen verhältnismäßig hohen Gestehungspreis und es haben mit einem solchen Bindemittel hergestellte Baustoffe oft geringere Festigkeitswerte als Baustoffe, deren Bindemittel ein mit weniger leicht in Bitumen löslichen Thermoplasten versetztes Bitumen ist. Bei verschiedenen Verfahren wurde ein hocherhitztes Gemenge aus Bitumen und Thermoplast mehr oder weniger stark durchmischt, wobei sich aber der Nachteil ergab, daß die gesamte Energiezufuhr (thermisch und mechanisch) nicht richtig dosiert werden konnte, was entweder - bei zu geringer Energiezufuhr - zu Endprodukten mit schlechten physikalischen Eigenschaften oder - bei zu hoher Energiezufuhr - zu unnötigem Energieaufwand bzw. durch zu starke Zersetzung insbesondere des Bitumens ebenfalls zu geringwertigen Produkten führte.

Bei einem aus der AT-A-370 126 bekannten Verfahren wird ein hocherhitztes Gemenge aus Bitumen und Thermoplastmaterial zur Homogenisierung einem hohe Scherkräfte auf das Gemenge ausübenden Zwangsmischvorgang unterworfen, wobei für diesen Zwangsmischvorgang Mischeinrichtungen verwendet werden, bei denen das Gemenge verhältnismäßig langsam durch einen zwischen zueinander bewegten Mischwerkzeugen gebildeten Spalt geleitet wird, in welchem es hohen Scherkräften unterworfen wird; als Mischeinrichtungen sind dabei im speziellen mischende Pumpen, nämlich Schraubenpumpen, Schneckenpumpen oder Zahnradpumpen, oder Knetvorrichtungen in Betracht gezogen.

Es ist ein Ziel der vorliegenden Erfindung, ein Verfahren eingangs erwähnter Art zu schaffen, welches nicht nur beim Einsatz üblicherweise in Bitumen schwer löslicher Thermoplaste, wie z.B. Polyäthylen, einen raschen Ablauf des Homogenisierungsvorganges erzielen läßt, sondern auch ein bituminöses Bindemittel ergibt, welches deutlich bessere Eigenschaften aufweist, als gleich oder ähnlich zusammengesetzte bituminöse Bindemittel, welche mit bekannten Verfahren hergestellt worden sind.

Das erfindungsgemäße Verfahren eingangs erwähnter Art ist dadurch gekennzeichnet, daß dem das Bitumen und einen Thermoplast oder eine Thermoplastmischung enthaltenden Gemenge bei der Homogenisierungsbehandlungeine, zum Herbeiführen des Molekülabbaues des Thermoplastmaterials ausreichende Energiemenge in Form von kinetischer Energie zugeführt wird, indem dem Gemenge eine dieser Energiemenge entsprechende Geschwindigkeit erteilt wird, und das Gemenge dann an einer Prallfläche abrupt abgebremst wird, wobei das Durcharbeiten des genannten Gemenges fortgesetzt wird, bis eine Strukturveränderung des Gemenges feststellbar ist, z.B. aus einer Veränderung der Röntgenlinien.

Durch diese Vorgangsweise kann der vorstehend angeführten Zielsetzung gut entsprochen werden und es ist so die Möglichkeit geschaffen, Bindemittel auf Basis von Bitumen und modifizierenden Thermoplasten, selbst wenn diese an sich in Bitumen schwer löslich sind, in verhältnismäßig kurzer Zeit herstellen zu können und dabei außerdem durch die Modifizierung eine beträchtliche Verbesserung der Bindemitteleigenschaften, die sich z.B. in der Haftung des Bindemittels an Gesteinsmaterial und in der Festigkeit der mit einem solchen Bindemittel erzeugten Baustoffe manifestieren, zu erreichen.

Es wird dem aus Bitumen und Thermoplastmaterial bestehenden Gemenge dadurch, daß es auf eine hohe Geschwindigkeit gebracht wird, kinetische Energie zugeführt. Durch die darauffolgende abrupte Abbremsung dieses Gemenges an einer Prallfläche ergibt sich in einem sehr kurzen Zeitraum eine Umwandlung der diesem Gemenge zuvor zugeführten kinetischen Energie und es werden dadurch die Moleküle des Thermoplastmaterials unter Bildung sehr reaktiver Molekülbruchstücke abgebaut, ohne daß der Abbau zu einer nachteiligen materialschädigenden Zersetzung des thermoplastischen Kunststoffes führt; die Moleküle des Bitumens, welche eine viel geringere Molekularmasse haben als die Moleküle des Thermoplastmaterials, erfahren durch die abrupte Abbremsung des Gemenges an der Prallfläche kaum einen Abbau. Es wird so eine Wirkung erreicht, welche der Wirkung einer sehr kurzen hohen Erhitzung des im Gemenge vorhandenen thermoplastischen Kunststoffes allein entspricht, bei der durch die sehr geringe Dauer der Erhitzung keine nachteilige Zersetzung auftritt. Es wird beim erfindungsgemäßen Verfahren die zugeführte Energie unter größtmöglicher Schonung des Materials, insbesondere des eingesetzten Bitu-

2

mens, differenziert und gezielt zum gewünschten geregelten Abbau des im Gemenge enthaltenen Thermoplastmaterials ausgenützt.

Der Abbau der Kunststoffmoleküle unter Bildung besonders reaktiver Bruchstücke kann durch die Einwirkung hoher Zentrifugalkräfte auf das zu einem Bindemittel zu verarbeitende Gemenge aus Bitumen und thermoplastischem Kunststoff gefördert werden. Es ist hiefür günstig, dem Gemenge eine möglichst hohe Umlaufgeschwindigkeit zu erteilen und das Gemenge von dieser Geschwindigkeit an der Prallfläche in einer kurzen Zeitspanne abzubremsen.

Eine vorzugsweise Ausführungsform des erfindungsgemäßen Verfahrens besteht darin, daß das Bitumen und einen Thermoplast oder eine Thermoplastmischung enthaltende Gemenge durch einen engen, im Durchschnitt eine geringere Breite als 3 mm, vorzugsweise eine geringere Breite als 0,3 mm aufweisenden Spalt zwischen zwei einander gegenüberstehenden und relativ zueinander rotierenden Mischwerkzeugen getrieben wird und das abrupte Abbremsen des Gemenges im Spaltbereich, vorzugsweise unmittelbar nach dem Austritt des Gemenges aus dem Spalt, vorgenommen wird. Die relativ zueinander rotierenden Mischwerkzeuge sind vorzugsweise koaxial zueinander angeordnet. Das Durcharbeiten des Gemenges kann oft vorteilhaft durch Pausen nach jedem Spaltdurchlauf unterbrochen werden.

Die vorstehend hinsichtlich der Breite des Spaltes zwischen den einander gegenüberstehenden und relativ zueinander rotierenden Mischwerkzeugen gemachten Angaben sind als Durchschnittswert zu verstehen. Der Spalt kann dabei auch durch Ausnehmungen, Nuten oder dgl. unterbrochen sein; der an der Stelle solcher Ausnehmungen oder Nuten vorliegende größere Abstand wird für die Ermittlung des Durchschnittswertes der Spaltbreite nicht berücksichtigt.

Wenn man das schmelzflüssige Gemenge aus Bitumen und thermoplastischem Kunststoff durch einen engen, vorzugsweise eine geringere Breite als 0,3 mm aufweisenden Spalt zwischen zwei relativ zueinander rotierenden Mischwerkzeugen treibt, ergibt sich außer der thermischen Beeinflussung auch eine spezielle Beanspruchung des den Spalt passierenden Gemenges durch die beim Aufprall auf die Prallfläche zur Umwandlung kommende kinetische Energie, wobei sich diese Beanspruchung insbesondere an der Thermoplastkomponente auswirkt, welche eine größere Molekularmasse bzw. ein größeres Molekulargewicht als Bitumen hat; wodurch sich bei dem unter diesen Belastungen eintretenden Abbau der im Gemenge vorliegenden Moleküle kürzere Molekülbruchstücke (d.h. Molekülbruchstücke mit geringerer Molekularmasse bzw. geringerem Molekulargewicht) ergeben, die eine starke Tendenz zum gegenseitigen Zusammenschluß aufweisen. Während bei einem gewöhnlichen intensiv betriebenen Durchrühren eines solchen Gemenges, z.B. eines Gemenges aus Bitumen und Polyäthylen, bei dem dieses Gemenge bzw. die darin enthaltenen Substanzen einer kombinierten thermischen und mechanischen Belastung unterworfen werden, nach Beendigung der Behandlung bloß eine Abschwächung oder ein völliges Verschwinden der für die Kristallstruktur des Kunststoffanteils charakteristischen Spektrallinien des Röntgenspektrums festgestellt werden kann, soferne die Behandlung bei der Zersetzungstemperatur des bzw. der einem Molekülabbau unterworfenen Konstituenten lange genug fortgesetzt worden ist, treten bei der Untersuchung eines nach dem erfindungsgemäßen Verfahren durch einen Spalt geringer Breite zwischen rotierenden Mischwerkzeugen getriebenen Gemenges klar erkennbar Röntgenlinien auf, welche auf das Vorliegen einer neuen Kristallstruktur hinweisen. Korrespondierend zu diesem Auftreten von für eine Kristallstruktur charakteristischen Röntgenlinien kann man an Baustoffen, welche mit einem auf erfindungsgemäße Weise erhaltenen Bindemittel hergestellt worden sind, deutlich bessere mechanische Eigenschaften feststellen, als bei Baustoffen, die mit Bindemitteln gebildet worden sind, bei denen Bitumen und thermoplastischer Kunststoff in schmelzflüssigem Zustand miteinander nur durch intensives Rühren vermischt worden sind. Hiezu kommt noch als weiterer Vorteil der vorerwähnten erfindungsgemäßen Vorgangsweise, bei der ein Gemenge aus schmelzflüssigem Bitumen und thermoplastischem Kunststoff durch einen engen Spalt zwischen rotierenden Mischwerkzeugen getrieben wird, daß auf diese Weise die Herstellung des mit thermoplastischem Kunststoff modifizierten bituminösen Bindemittels in deutlich kürzerer Zeit als bei dem bekannten intensiven Durchrühren eines solchen Gemenges bewerkstelligt werden kann. Überdies, und dies ist ein ganz wesentlicher Vorteil, kann bei einer deutlich niedrigeren mittleren Temperatur bzw. Behandlungstemperatur des zu behandelnden Gemenges aus thermoplastischem Kunststoff und Bitumen gearbeitet werden als beim bekannten Homogenisieren eines solchen Gemenges durch intensives Rühren, und es liegt auf der Hand, daß dies dadurch möglich ist, daß einerseits die Kunststoffmoleküle beim Durchtreiben des Gemenges durch den engen Spalt einerseits eine mechanische Reckung erfahren und daß andererseits die Moleküle des thermoplastischen Kunststoffes bei der Umwandlung der dem Gemenge zugeführten kinetischen Energie an der Prallfläche in sehr reaktive Bruchstücke geteilt werden. Solche Bruchstücke vereinen sich danach zu einer mindestens teilweise kristallinen Struktur. Dies ist auch aus der Veränderung der Röntgenlinien gegenüber dem vor dem Durchtreiben des Gemenges durch den Spalt vorliegenden Zustand ersichtlich. Es erfährt diese mindestens teilweise kristalline Struktur dadurch, daß sie im umgebenden

EP 0 425 527 B1

Bitumen entsteht, auch eine enge Verflechtung mit dem Bitumen.

Die enge Verflechtung des Thermoplasts mit dem Bitumen kann auch aus dem Verhalten eines erfindungsgemäß hergestellten Bindemittels bei einer längerdauernden Heißlagerung ersehen werden. Ein nach dem erfindungsgemäßen Verfahren behandeltes Gemenge aus Bitumen und Thermoplast ist gleich nach seiner Herstellung bei Beleuchtung mit Licht des sichtbaren Wellenlängenbereiches visuell homogen und zeigt bei Beleuchtung mit ultraviolettem Licht ein dichtes Muster heller Punkte auf dunklerem Grund; nach vielstündiger Heißlagerung bei einer Temperatur, die deutlich über der Schmelztemperatur des Thermoplasts liegt, vereinigen sich die zuvor als Punkte sichtbar gewesenen Partikel zu einer hellen Deckschicht, deren Volumen etwa das vier- bis achtfache des Volumens des Thermoplastanteils des Gemenges beträgt; durch einfaches, kurzzeitiges Umrühren kann diese Deckschicht wieder mit dem übrigen Teil des Bindemittels zu einer visuell homogenen Substanz vereinigt werden. Dieses Verhalten unterscheidet sich deutlich vom Verhalten eines in bekannter Weise durch langdauerndes Rühren eines geschmolzenen Gemenges aus Bitumen und Thermoplast erhaltenen homogenisierten Produktes; bei einem solchen Produkt bildet sich bei einer mehrstündigen Heißlagerung eine helle Deckschicht, deren Volumen annähernd dem Volumen des Thermoplastanteiles des Gemenges entspricht, und es ist zum neuerlichen Homogenisieren der Deckschicht mit dem Hauptteil des Materials, aus dem sich die Deckschicht bei der Heißlagerung abgesondert hat, praktisch die gleiche Rührarbeit erforderlich, wie sie beim ersten homogenisierenden Rühren aufgewendet worden ist.

Die beiden Mischwerkzeuge, zwischen denen der Spalt vorliegt, durch den das zur Bildung des Bindemittels vorgesehene Gemenge getrieben wird, sollen relativ zueinander rotieren. Dies kann einfach so realisiert sein, daß das eine Mischwerkzeug stillsteht und das andere rotiert. Es können aber auch beide Mischwerkzeuge rotieren und zwar entweder in zueinander entgegengesetzten Drehrichtungen oder mit gleicher Drehrichtung aber verschiedenen Umlaufgeschwindigkeiten.

Es ist im Rahmen des erfindungsgemäßen Verfahrens besonders günstig, wenn das Bitumen und thermoplastischen Kunststoff enthaltende Gemenge durch einen zwischen relativ zueinander koaxial rotierenden Mischwerkzeugen vorliegenden Spalt, der eine durchschnittliche Breite von etwa 0,1 mm aufweist oder noch schmäler ist, getrieben wird. Es kann durch diese Weiterbildung der beim erfindungsgemäßen Verfahren vorzugsweise vorgesehenen Maßnahme, das zu homogenisierende Gemenge in einem sehr engen Spalt zu behandeln, die beim erfindungsgemäßen Verfahren in den Kunststoffmolekülen hervorgerufene Abbauwirkung, die zum Entstehen sehr reaktiver Molekülbruchstücke führt, die eine besondere Tendenz zur Rekristallisierung zeigen, weiter intensiviert werden, wobei diese Wirkung mit abnehmender Spaltbreite bei immer geringeren mittleren Temperaturen des Gemenges erzielt werden kann. Es hat sich weiter auch als vorteilhaft erwiesen, den Spalt so zu formen, daß das Gemenge im Spalt einem durch hydrodynamische Wirkung aufgebauten Druck unterworfen wird.

Für die erwähnte Ausführungsform des erfindungsgemäßen Verfahrens, bei der das Gemenge durch einen Spalt getrieben wird, sieht man vorteilhaft vor, daß das Gemenge durch einen mindestens am Austrittsrand radial verlaufenden Spalt getrieben wird, aus dem es in radialer Richtung austritt. Es kann dabei eine besonders gute Wirkung erzielt werden, wenn das abrupte Abbremsen des Gemenges im Spaltbereich, vorzugsweise unmittelbar nach dem Austritt des Gemenges aus dem Spalt, vorgenommen wird, da solcherart die den Kunststoffmolekülen durch Zentrifugalkraft erteilte hohe Geschwindigkeit und die damit einhergehende kinetische Energie besonders gut für die Teilung der Kunststoffmoleküle in reaktive Bruchstücke genützt wird.

Hinsichtlich der Geschwindigkeit, welche dem Gemenge erteilt wird, bevor es an einer Prallfläche abrupt abgebremst wird, hat sich für verschiedene Anwendungsfälle ein Wert von etwa 30 m/s als günstig erwiesen.

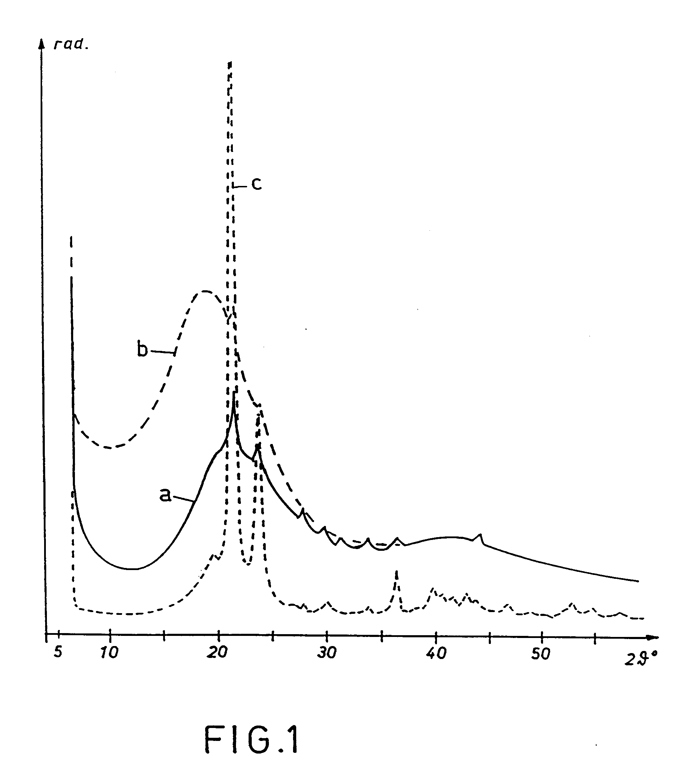

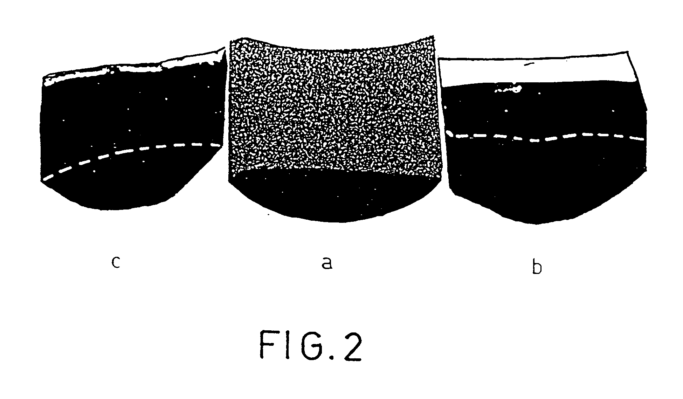

Die Erfindung wird nun an Hand von Beispielen unter ergänzender Bezugnahme auf die Zeichnung, in der Fig. 1 Röntgenspektren verschiedener Substanzen und Fig. 2 Schnittbilder von Körpern aus einigen verschiedenen Substanzen zeigt, weiter erläutert.

**Beispiel 1:** Es wurde ein schmelzflüssiges Gemenge, welches aus 94 %-Masse Bitumen B 100 und 6 %-Masse Hochdichtepolyäthylen bestand, zunächst in einem Vorratsbehälter leicht durchgerührt und es wurde dieses Gemenge aus dem Vorratsbehälter einer Durchlauf-Mischvorrichtung zugeführt, welche zwei scheibenförmige, einander gegenüberstehende Mischwerkzeuge aufwies, wobei das eine Mischwerkzeug stillstehend und das andere koaxial zum ersten drehbar gelagert und mit einem Antrieb verbunden war. Sowohl das stillstehende Mischwerkzeug als auch das rotierende Mischwerkzeug waren an den einander zugewandten Seiten mit Rippen versehen. An den einander zugewandten Seiten der beiden Mischwerkzeuge war zwischen den Rippen des einen Mischwerkzeuges und den Rippen des anderen Mischwerkzeuges ein Spalt von ca. 0,1 mm, durch den das zu behandelnde Gemenge getrieben wurde. Die Umfangsgeschwindigkeit des rotierenden Mischwerkzeuges am äußeren Rand des Spaltes war ca. 30 m/s. Desgleichen war die Durchflußgeschwindigkeit des Gemenges durch den Spalt ca. 30 m/s. Im Spaltbereich waren Prallflächen vorgesehen, an die das Gemenge stieß und dabei abrupt abgebremst wurde. Das Gemenge wurde sechs mal durch die Durchlauf-Mischvorrichtung geleitet. Dies erforderte ca. 20 min. Danach wurde das so erhaltene bituminöse Bindemittel mit einem vorerhitzten Gesteinsmaterial und Gesteinsmehlfüller mit einer genormten Zusammensetzung für Asphaltbeton 08 vermengt und es wurden aus dem so erhaltenen Baustoff in genormter Vorgangsweise Marshall-Testkörper hergestellt, welche darauf auf ihre mechanischen Eigenschaften untersucht wurden. Die erhaltenen Meßwerte sind in der Tabelle in Spalte 1 angeführt.

**Beispiel 2:** Es wurde analog Beispiel 1 vorgegangen, wobei aber das zur Herstellung des Bindemittels bestimmte Gemenge aus 94 %-Masse Bitumen B 100 und 6 %-Masse Niederdichtepolyäthylen bestand. Die erhaltenen Meßwerte sind in der Tabelle in Spalte 2 angeführt.

**Beispiel 3**: Es wurde analog Beispiel 1 vorgegangen, wobei aber das zur Herstellung des Bindemittels bestimmte Gemenge aus 94 %-Masse Bitumen B 100 und aus 6 %-Masse Äthylen-Propylen-Dien-Mischpolymerisat bestand. Die erhaltenen Meßwerte sind in der Tabelle in Spalte 3 angeführt.

**Beispiel 4:** Es wurde analog Beispiel 1 vorgegangen, wobei aber das zur Herstellung des Bindemittels bestimmte Gemenge aus 94 %-Masse Bitumen B 100 und aus 6 %-Masse Styrol-Butadien-Styrol-Blockpolymerisat bestand. Die erhaltenen Meßwerte sind in der Tabelle in Spalte 4 angeführt.

**Beispiel 5**: Es wurde analog Beispiel 1 vorgegangen, wobei aber das zur Herstellung des Bindemittels bestimmte Gemenge aus 94 %-Masse Bitumen B 100 und aus 2 %-Masse Äthylen-Propylen-Dien-Mischpolymerisat und 4 %-Masse Niederdichtepolyäthylen bestand. Die erhaltenen Meßwerte sind in der Tabelle in Spalte 5 angeführt.

**Beispiel 6:** Es wurde analog Beispiel 1 vorgegangen, wobei aber das zur Herstellung des Bindemittels bestimmte Gemenge aus 94 %-Masse Bitumen B 100 und aus 2 %-Masse Äthylen-Propylen-Dien-Mischpolymerisat und 4 %-Masse Hochdichtepolyäthylen bestand. Die erhaltenen Meßwerte sind in der Tabelle in Spalte 6 angeführt.

**Beispiel 7:** Es wurden zum Vergleich die Eigenschaften des in den Beispielen 1 bis 6 verwendeten Bitumens und eines analog damit hergestellten Baustoffes untersucht. Die erhaltenen Meßwerte sind in der Tabelle in Spalte 7 angeführt.

**Beispiel 8:** Es wurde das nach Beispiel 1 erhaltene fertige Bindemittel im abgekühlten Zustand einer Röntgen-Spektraluntersuchung unterworfen. Hiebei wurde das in Fig. 1 der Zeichnung mit a bezeichnete Spektrum erhalten. Es wurde weiter ein durch bloßes Rühren gemischtes, visuell homogenes Gemenge, welches die gleiche Zusammensetzung hatte, wie das Gemenge nach Beispiel 1, im abgekühlten Zustand der gleichen Röntgen-Spektraluntersuchung unterworfen, wobei das in Fig. 1 mit b bezeichnete Spektrum erhalten wurde, und es wurde auch das bei Beispiel 1 verwendete Polyäthylen im kalten Zustand dieser Röntgen-Spektraluntersuchung unterworfen, wobei das in Fig. 1 mit c bezeichnete Spektrum erhalten wurde. Es ist aus diesen Röntgenspektren ersichtlich, daß die starken Spektrallinien, die im Spektrum c vorliegen und die von der kristallinen Struktur des Polyäthylens verursacht sind, im Spektrum b nicht mehr aufscheinen. Daraus folgt, daß bei diesem Gemenge aus Bitumen und Polyäthylen, das durch bloßes Rühren gemischt worden ist, auch im abgekühlten Zustand praktisch keine kristalline Struktur vorliegt. Im Spektrum a scheinen Spektrallinien auf, welche zu den von der kristallinen Struktur des Polyäthylens herrührenden starken Spektrallinien des Spektrums c korrespondieren. Daraus ergibt sich, daß bei dem nach dem erfindungsgemäßen Verfahren gemäß Beispiel 1 hergestellten Bindemittel im abgekühlten Zustand mindestens teilweise eine aus den Molekülbruchstücken des Polyäthylens entstandene kristalline Struktur vorliegt.

**Beispiel 9:** Es wurde eine Probe eines gemäß Beispiel 2 aus 94 %-Masse Bitumen B 100 und 6 %-Masse Niederdichtepolyäthylen nach dem erfindungsgemäßen Verfahren hergestellten Bindemittels in einem Becher erstarren gelassen, wonach der so erhaltene Körper vertikal aufgespalten wurde. Die Spaltfläche zeigte bei Beleuchtung mit sichtbarem Licht ein homogenes Aussehen; bei Beleuchtung mit ultraviolettem Licht war ein dichtes Muster gleichmäßig verteilter heller Punkte auf dunklerem Grund sichtbar. Eine Abbildung dieser Spaltfläche ist in Fig. 2 mit a bezeichnet. Eine weitere Probe dieses Bindemittels wurde 24 Stunden bei 160°C in einem Becher gelagert und danach in diesem Becher erkalten gelassen, wonach der so entstandene Körper aufgespalten wurde. Bei Beleuchtung mit ultraviolettem Licht war eine helle Schicht erkennbar, die annähernd das bei der vorangegangenen Lagerung oben liegende Drittel dieses Körpers einnahm, während die darunterliegenden zwei Drittel des Körpers eine dunkle Farbe hatten. Eine Abbildung der Spaltfläche dieses Körpers ist in Fig. 2 mit b bezeichnet. Dieser Körper wurde danach wieder aufgeschmolzen und es wurde diese Schmelze bei ca. 170°C durchgerührt, wobei die Schmelze nach einigen Minuten ein völlig homogenes Aussehen erreichte.

**Beispiel 10**: Es wurde ein Gemenge aus den auch bei Beispiel 2 verwendeten Stoffen mit einer Zusammensetzung 94 %-Masse Bitumen B 100 und 6 %-Masse Niederdichtepolyäthylen gebildet. Dieses Gemenge wurde zur Bildung eines homogenen Produktes 1 1/2 Stunden lang bei 280°C gerührt. Danach wurde eine Probe dieses Produktes 24 Stunden bei 160°C in einem Becher gelagert und danach in diesem Becher erkalten gelassen, wonach der so entstandene Körper aufgespalten wurde. Bei Beleuchtung mit ultraviolettem Licht war eine helle Schicht erkennbar, die in ihrem Volumen etwa das Volumen des Polyäthylenanteils des Produktes hatte und sich an der bei der vorangegangenen Lagerung oben gelegenen Seite befand. Eine Abbildung der Spaltfläche dieses Körpers ist in Fig. 2 mit c bezeichnet. Dieser Körper wurde danach wieder aufgeschmolzen und es wurde die so erhaltene Schmelze wieder bei ca. 280°C durchgerührt. Dieses Rühren mußte über 1 Stunde lang fortgesetzt werden, um wieder ein völlig homogenes Aussehen der Schmelze zu erreichen.

## TABELLE

| Beispiel | 7 | 1 | 2 | 3 | 4 | 5 | 6 |
|---|---|---|---|---|---|---|---|
| | B 100 100% | B 100 94% HDPE 8% | B 100 94% LDPE 6% | B 100 94% EPDM 6% | B 100 94% SBS 6% | B 100 94% LDPE 4% EPDM 2% | B 100 94% HDPE 4% EPDM 2% |
| E R & K °C | 48,0 | 57,0 | 54,0 | 86,0 | 72,0 | 86,0 | 74,0 |
| Pen / 25°C 1/10 | 101,0 | 75,0 | 61,0 | 47,0 | 82,0 | 40,3 | 32,3 |
| Fraass | -9 | -10 | -10 | -21 | -15 | -15 | -14 |
| Bindemittelgehalt M% | 5,2 | 5,2 | 5,2 | 5,2 | 5,2 | 5,2 | 5,2 |
| Rohdichte g/cm3 | 2,60 | 2,60 | 2,60 | 2,80 | 2,58 | 2,58 | 2,53 |
| Raumdichte g/cm3 | 2,55 | 2,54 | 2,52 | 2,53 | 2,54 | 2,53 | 2,54 |
| Hohlraumgehalt Vol % | 1,9 | 2,3 | 3,1 | 2,7 | 1,8 | 1,8 | 1,9 |
| Tragwert KN | 11,0 | 12,4 | 15,4 | 13,8 | 13,1 | 15,3 | 14,5 |
| Fließwert mm | 5,07 | 4,47 | 2,83 | 4,47 | 5,00 | 4,50 | 4,57 |
| Steifigkeit T/F KN/mm | 2,1 | 2,7 | 5,2 | 3,1 | 2,6 | 3,4 | 3,1 |
| Spaltzugfestigkeit /25 °C N/mm2 | 0,81 | 1,04 | 1,43 | 1,27 | 0,78 | 1,41 | 1,39 |
| Spaltzugfestigkeit /40°C N/mm2 | 0,18 | 0,31 | 0,48 | 0,45 | 0,28 | 0,47 | 0,46 |
| E-Modul /25°C N/mm2 | 461 | 708 | 1197 | 909 | 481 | 1104 | 1096 |
| E-Modul /40°C N/mm2 | 110 | 202 | 456 | 327 | 189 | 320 | 304 |
| Dichte gesamt g/cm3 | 1,016 | 1,013 | 1,017 | 1,018 | 1,022 | 1,029 | 1,025 |

## Patentansprüche

1.  Verfahren zur Herstellung eines mit thermoplastischem Kunststoff modifizierten bituminösen Bindemittels für Baustoffe, insbesondere Straßenbaumaterial, wobei zur Bildung des Bindemittels schmelzflüssiges Bitumen zusammen mit einem Thermoplast oder einer Thermoplastmischung, vorzugsweise einem Olefinpolymer, einer Homogenisierungsbehandlung unter Einwirkung mechanischer Scherkräfte unterworfen wird, wobei im Thermoplastmaterial ein Molekülabbau stattfindet, dadurch gekennzeichnet, daß dem das Bitumen und einen Thermoplast oder eine Thermoplastmischung enthaltenden Gemenge bei der Homogenisierungsbehandlung eine zum Herbeiführen des Molekülabbaues des Thermoplastmaterials ausreichende Energiemenge in Form von kinetischer Energie zugeführt wird, indem dem Gemenge eine dieser Energiemenge entsprechende Geschwindigkeit erteilt wird und das Gemenge dann an einer Prallfläche abrupt abgebremst wird, wobei das Durcharbeiten des genannten Gemenges fortgesetzt wird, bis eine Strukturveränderung des Gemenges feststellbar ist, z.B. aus einer Veränderung der Röntgenlinien.

2. Verfahren nach Anspruch 1, dadurch gekennzeichnet, daß das Bitumen und einen Thermoplast oder eine Thermoplastmischung enthaltende Gemenge durch einen engen, im Durchschnitt eine geringere Breite als 3 mm, vorzugsweise eine geringere Breite als 0,3 mm aufweisenden Spalt zwischen zwei einander gegenüberstehenden und relativ zueinander rotierenden Mischwerkzeugen getrieben wird und das abrupte Abbremsen des Gemenges im Spaltbereich, vorzugsweise unmittelbar nach dem Austritt des Gemenges aus dem Spalt, vorgenommen wird.

3. Verfahren nach Anspruch 2, dadurch gekennzeichnet, daß das Durcharbeiten des Gemenges durch Pausen nach jedem Spaltdurchlauf unterbrochen wird.

4. Verfahren nach Anspruch 2 oder 3, dadurch gekennzeichnet, daß das Gemenge durch einen zwischen relativ zueinander rotierenden Mischwerkzeugen vorliegenden, im Durchschnitt etwa 0,1 mm breiten oder schmäleren Spalt, getrieben wird.

5. Verfahren nach einem der Ansprüche 2 bis 4, dadurch gekennzeichnet, daß das Gemenge durch einen Spalt getrieben wird, der mindestens am Austrittsrand radial verläuft, wobei das Gemenge aus dem Spalt in radialer Richtung austritt.

6. Verfahren nach einem der vorhergehenden Ansprüche, dadurch gekennzeichnet, daß dem Gemenge eine Geschwindigkeit von etwa 30 m/s erteilt wird.

7. Verfahren nach einem der vorhergehenden Ansprüche, dadurch gekennzeichnet, daß als Thermoplastmaterial Polyäthylen verwendet wird.

**Claims**

1. A process for the production of a bituminous binder modified with synthetic thermoplastic material for construction materials, in particular road building material, wherein for the formation of the binder, molten bitumen together with a thermoplast or with a mixture of thermoplasts, preferably with an olefin polymer, is subjected to a homogenization treatment under the influence of mechanical shearing forces, wherein a disintegration of molecules takes place in the thermoplast, characterised in that at the homogenization treatment, to the mixture containing the bitumen and a thermoplast or a mixture of thermoplasts an amount of energy in the form of kinetic energy is supplied sufficient to cause the disintegration of molecules of the thermoplastic material, by imparting to this mixture a velocity corresponding to this amount of energy and then abruptly braking the mixture on an impact surface, wherein processing of said mixture is continued until a change of structure of the mixture is noticeable, e.g. by a change of the X-ray spectrum lines.

2. A process according to claim 1, characterised in that the mixture containing the bitumen and a thermoplast or a mixture of thermoplasts is forced through a narrow gap between two oppositely arranged mixing tools rotating relative to each other, the gap on an average having a width of less than 3 mm, preferably a width of less than 0.3 mm, and the abrupt braking of the mixture is effected in the gap region, preferably immediately after emergence of the mixtrue from the gap.

3. A process according to claim 2, characterised in that the processing of the mixture is interrupted after each gap passage by pauses.

4. A process according to claim 2 or 3, characterised in that the mixture is forced through a gap present between mixing tools rotating relative to each other, the gap on an average having a width of approximately 0.1 mm or less.

5. A process according to any one of claims 2 to 4, characterised in that the mixture is forced through a gap extending radially at least at the rim of emergence, the mixture emerging from the gap in the radial direction.

6. A process according to any one of the preceding claims, characterised in that a velocity of approximately 30 m/s is imparted to the mixture.

7. A process according to any one of the preceding claims, characterised in that polyethylene is used as the thermoplastic material.

**Revendications**

1. Procédé pour préparer un liant bitumineux, modifié par une résine synthétique thermoplastique, pour matériaux de construction, en particulier pour matériaux de construction de routes, dans lequel, pour former le liant, on soumet le bitume fondu à un traitement d'homogénéisation avec une résine synthétique thermoplastique ou un mélange de résines synthétiques thermoplastiques, de préférence un polymère d'oléfines, sous l'action de forces mécaniques de cisaillement, ce qui provoque dans la matière thermoplastique une dégradation moléculaire, ce procédé se caractérisant en ce que, au traitement d'homogénéisation, on apporte au mélange contenant le bitume et une résine synthétique thermoplastique ou un mélange de résines synthétiques thermoplastiques, sous forme d'énergie cinétique, une quantié d'énergie suffisante pour provoquer la dégradation moléculaire de la matière thermoplastique en conférant au mélange une vitesse correspondant à cette quantité d'énergie puis en le freinant brutalement sur une surface de rebondissement, et en poursuivant le travail du mélange jusqu'à ce qu'on constate une modification de structure du mélange, par exemple par une modification des raies de rayons X.

2. Procédé selon la revendication 1, caractérisé en ce que l'on refoule le mélange contenant le bitume et une résine synthétique thermoplastique ou un mélange de résines thermoplastiques au travers d'une fente étroite ayant une largeur moyenne inférieure à 3 mm, de préférence une largeur inférieure à 0,3 mm, entre deux outils de mélange se faisant face et en mouvement mutuel relatif de rotation, et on provoque le freinage brutal du mélange dans la région de la fente, de préférence immédiatement après sortie du mélange de la fente.

3. Procédé selon la revendication 2, caractérisé en ce que l'on interrompt le travail du mélange par des pauses après chaque passage dans la fente.

4. Procédé selon la revendication 2 ou 3, caractérisé en ce que l'on refoule le mélange au travers d'une fente d'une largeur moyenne d'environ 0,1 mm ou plus étroite existant entre des outils de mélange en mouvement relatif mutuel de rotation.

5. Procédé selon l'une des revendications 2 à 4, caractérisé en ce que l'on refoule le mélange au travers d'une fente qui, au moins sur le bord de sortie, a une forme radiale, de sorte que le mélange sort de la fente en direction radiale.

6. Procédé selon l'une des revendications précédentes, caractérisé en ce que l'on confère au mélange une vitesse d'environ 30 m/s.

7. Procédé selon l'une des revendications précédentes, caractérisé en ce que la matière thermoplastique utilisée est un polyéthylène.

FIG.1

c            a            b

FIG.2